# EUROPEAN PATENT APPLICATION

(11) **EP 4 317 003 A1**
(43) Date of publication of application: **07.02.2024**
(21) Application number: 22196260.8
(22) Date of filing: 19.09.2022
(51) Int. Cl.: B65D 6/00, B65D 25/34, B65D 65/40, B65D 81/02, B65D 81/05, B65D 81/26, B65D 43/16, B65D 25/10, B65D 81/127

(54) **GIFT BOX**

(30) Priority: 04.08.2022 CN 202210934870
(71) Applicant: Dongguan Waching Printing Company Limited, Dongguan City, Guangdong (CN)
(72) Inventor: Chen, Ke, 423500 Chenzhou (CN)
(74) Representative: Zaboliene, Reda

(57) **Abstract**

The present disclosure relates to the technical field of gift box paperboards, and provides a novel gift box paperboard, including a first box body. A first paperboard is arranged on one side of the first box body. A clamping block is fixedly connected to the bottom of the first paperboard. A second paperboard is arranged on one side of the first paperboard. A clamping groove used in cooperation with the clamping block is formed in one side of the second paperboard. The problem that paperboard boxes are very cumbersome to make and cannot be massively produced due to inconvenient connection between paperboards in related technologies is solved.

## Description

### CROSS-REFERENCE TO RELATED APPLICATIONS

The application claims priority to Chinese patent application No. 2022109348700, filed on August 4, 2022, the entire contents of which are incorporated herein by reference.

### FIELD OF TECHNOLOGY

The present disclosure relates to the technical field of gift box paperboards, in particular to a novel gift box paperboard.

### BACKGROUND

A paperboard, as a common material for a paper packaging box, has a certain thickness and generally includes core paper positioned in the middle and surface paper and lining paper positioned on two sides of the core paper. Specifically, when the paperboard is made into a carton, the lining paper is positioned inside the carton, and the surface paper is positioned outside the carton. During gift giving, paperboard boxes are often needed to package gifts. Existing paperboards are inconvenient to connect, so paperboard boxes are very cumbersome to make and cannot be massively produced.

### SUMMARY

The present disclosure provides a novel gift box paperboard, and solves the problem that paperboard boxes are very cumbersome to make and cannot be massively produced due to inconvenient connection between paperboards in related technologies.

A technical solution of the present disclosure is as follows: a novel gift box paperboard, including a first box body, where a first paperboard is arranged on one side of the first box body, a clamping block is fixedly connected to the bottom of the first paperboard, a second paperboard is arranged on one side of the first paperboard, a clamping groove used in cooperation with the clamping block is formed in one side of the second paperboard, a rotating shaft is fixedly connected to the bottom of the second paperboard, a baffle is rotatably connected to an outer wall of the rotating shaft, a third paperboard is arranged on the other side of the second paperboard, a fourth paperboard is arranged at the top of the third paperboard, a second box body is rotatably connected to one side of the first box body, a third magnet is arranged at the top of the first box body, a fourth magnet is arranged on an outer wall of the second box body, and the third magnet and the fourth magnet have opposite magnetic poles.

Preferably, a waterproof layer is arranged on an outer wall of each of the first paperboard, the second paperboard, the third paperboard, and the fourth paperboard, a ventilation layer is arranged on an inner wall of the waterproof layer, a buffer layer is arranged on an inner wall of the ventilation layer, a reinforcement layer is arranged on an inner wall of the buffer layer, the first box body and the second box body are made of corrugated paper, and three-in-one white glue is arranged on an outer wall of each of the first box body and the second box body.

Preferably, the waterproof layer is made from polyethylene.

Preferably, circular grooves are equidistantly formed inside the ventilation layer.

Preferably, the inside of the buffer layer is made of a triangular plate.

Preferably, the reinforcement layer is made from high-pressure wood fibers.

Preferably, a first magnet is fixedly connected to one side of the fourth paperboard, a second magnet is fixedly connected to a side of the first paperboard close to the fourth paperboard, and the first magnet and the second magnet are magnetically opposite.

Preferably, a fixing plate is fixedly connected to the top of the second paperboard, a rubber plate is fixedly connected to the top of the fixing plate, a sponge plate is fixedly connected to the top of the rubber plate, and a groove is formed in the top of the sponge plate.

Preferably, a through groove is formed inside the fourth paperboard, a reinforcement ring is fixedly connected to an inner wall of the through groove, a rotating block is fixedly connected to an inner wall of the reinforcement ring, a rotating plate is rotatably connected to one end of the rotating block, a second inclined block is fixedly connected to the top of the rotating plate, a first inclined block is fixedly connected to the inner wall of the reinforcement ring and positioned above the rotating block, and a spring is arranged between the first inclined block and the second inclined block.

The present disclosure has the following beneficial effects:
In the present disclosure, the third magnet and the fourth magnet are adsorbed together due to opposite magnetic poles, such that the first box body and the second box body are convenient to install; the first box body and the second box body are made of the corrugated paper, such that the material and quality are good, and a box in the hand is just right in weight, not too heavy or too light, environmentally friendly, and not flashy without substance; the second paperboard is placed on the clamping block at the bottom of the first paperboard, and at this time the clamping groove is in clamped connection with the clamping block, such that the first paperboard and the second paperboard are convenient to quickly connect; the baffle is rotated to abut against a joint between the clamping block and the clamping groove, such that the clamping block may be prevented from being separated from the clamping groove; and the structure enables the first paperboard and the second paperboard to be installed stably and facilitates the assembly of the gift box.

### BRIEF DESCRIPTION OF THE DRAWINGS

The present disclosure will be further described in detail below with reference to the accompanying drawings and specific implementations.
FIG. 1 is a three-dimensional diagram of the present disclosure;
FIG. 2 is a three-dimensional diagram of cooperative use of a first paperboard, a second paperboard, a third paperboard, and a fourth paperboard in the present disclosure;
FIG. 3 is a cross-sectional view of cooperative use of the first paperboard, the second paperboard, the third paperboard, and the fourth paperboard in the present disclosure;
FIG. 4 is an enlarged view of A in the present disclosure; FIG. 5 is an enlarged view of B in the present disclosure; and
FIG. 6 is a diagram of cooperative use of a clamping groove and a clamping block in the present disclosure.

In which: 1: first paperboard; 2: second paperboard; 3: third paperboard; 4: fourth paperboard; 5: through groove; 6: fixing plate; 7: rubber plate; 8: sponge plate; 9: groove; 10: first magnet; 11: second magnet; 12: clamping groove; 13: clamping block; 14: rotating shaft; 15: baffle; 16: waterproof layer; 17: ventilation layer; 18: buffer layer; 19: reinforcement layer; 20: rotating block; 21: reinforcement ring; 22: first inclined block; 23: spring; 24: second inclined block; 25: rotating plate; 26: first box body; 27: second box body; 28: third magnet; and 29: fourth magnet.

### DESCRIPTION OF THE EMBODIMENTS

The technical solution in the embodiments of the present disclosure will be clearly and completely described below with reference to the embodiments of the present disclosure. Apparently, the described embodiments are merely a part rather than all of the embodiments of the present disclosure. All other embodiments obtained by those of ordinary skill in the art based on the embodiments in the present disclosure without creative efforts fall within the scope of protection of the present disclosure.

### Embodiment 1

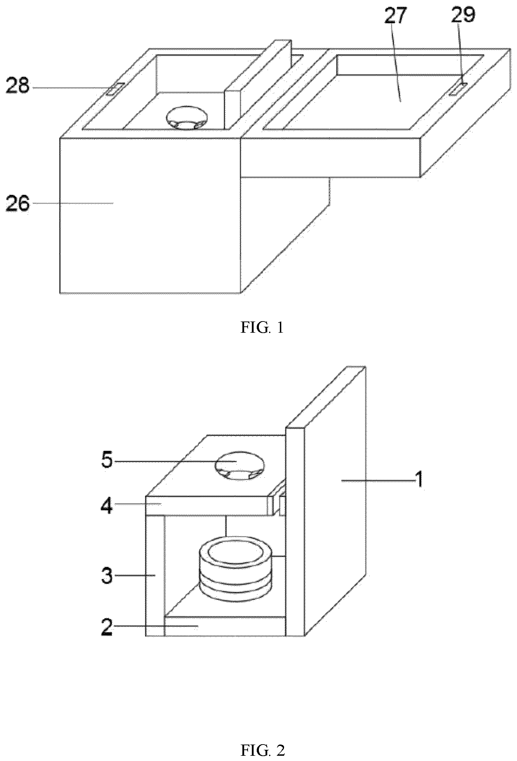

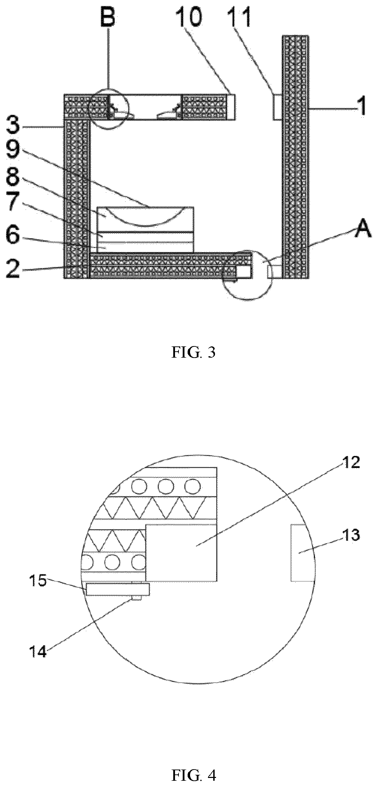

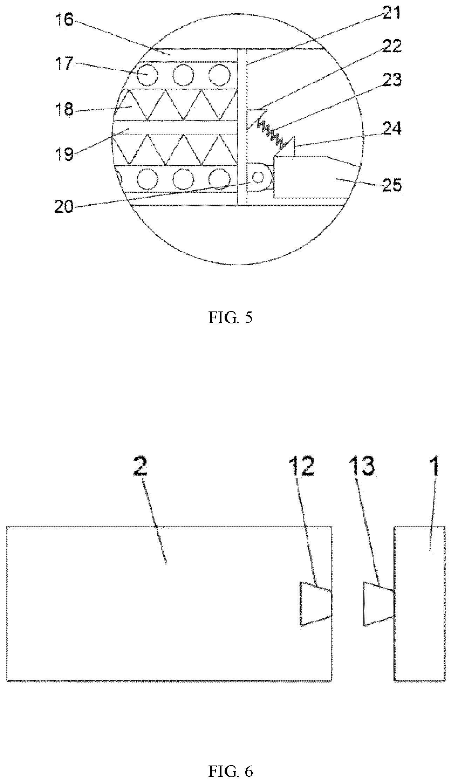

As shown in FIGS. 1 to 5, this embodiment provides a novel gift box paperboard, including a first box body 26, where a first paperboard 1 is arranged on one side of the first box body 26, a clamping block 13 is fixedly connected to the bottom of the first paperboard 1, a second paperboard 2 is arranged on one side of the first paperboard 1, a clamping groove 12 used in cooperation with the clamping block 13 is formed in one side of the second paperboard 2, a rotating shaft 14 is fixedly connected to the bottom of the second paperboard 2, a baffle 15 is rotatably connected to an outer wall of the rotating shaft 14, a third paperboard 3 is arranged on the other side of the second paperboard 2, a fourth paperboard 4 is arranged at the top of the third paperboard 3, a second box body 27 is rotatably connected to one side of the first box body 26, a third magnet 28 is arranged at the top of the first box body 26, a fourth magnet 29 is arranged on an outer wall of the second box body 27, and the third magnet 28 and the fourth magnet 29 have opposite magnetic poles.

In this embodiment, the first paperboard 1 is installed on one side of an inner wall of the first box body 26, the second paperboard 2 is placed on the clamping block 13 at the bottom of the first paperboard 1, and at this time the clamping groove 12 is in clamped connection with the clamping block 13, such that the first paperboard 1 and the second paperboard 2 are convenient to quickly connect; the baffle 15 is rotated to abut against a joint between the clamping block 13 and the clamping groove 12, such that the clamping block 13 may be prevented from being separated from the clamping groove 12; the structure enables the first paperboard 1 and the second paperboard 2 to be installed stably and facilitates the assembly of a gift box; by arranging the second box body 27, a gift inside may be better protected; and the third magnet 28 and the fourth magnet 29 are adsorbed together due to opposite magnetic poles, such that the first box body 26 and the second box body 27 are convenient to install.

### Embodiment 2

As shown in FIGS. 1 to 5, based on the same concept as the above-mentioned Embodiment 1, it is further proposed in this embodiment that a waterproof layer 16 is arranged on an outer wall of each of the first paperboard 1, the second paperboard 2, the third paperboard 3, and the fourth paperboard 4, a ventilation layer 17 is arranged on an inner wall of the waterproof layer 16, a buffer layer 18 is arranged on an inner wall of the ventilation layer 17, a reinforcement layer 19 is arranged on an inner wall of the buffer layer 18, the first box body 26 and the second box body 27 are made of corrugated paper, and three-in-one white glue is arranged on an outer wall of each of the first box body 26 and the second box body 27; the waterproof layer 16 is made from polyethylene; circular grooves are equidistantly formed inside the ventilation layer 17; the inside of the buffer layer 18 is made of a triangular plate; the reinforcement layer 19 is made from high-pressure wood fibers; a first magnet 10 is fixedly connected to one side of the fourth paperboard 4, a second magnet 11 is fixedly connected to a side of the first paperboard 1 close to the fourth paperboard 4, and the first magnet 10 and the second magnet 11 are magnetically opposite; a fixing plate 6 is fixedly connected to the top of the second paperboard 2, a rubber plate 7 is fixedly connected to the top of the fixing plate 6, a sponge plate 8 is fixedly connected to the top of the rubber plate 7, and a groove 9 is formed in the top of the sponge plate 8; and a through groove 5 is formed inside the fourth paperboard 4, a reinforcement ring 21 is fixedly connected to an inner wall of the through groove 5, a rotating block 20 is fixedly connected to an inner wall of the reinforcement ring 21, a rotating plate 25 is rotatably connected to one end of the rotating block 20, a second inclined block 24 is fixedly connected to the top of the rotating plate 25, a first inclined block 22 is fixedly connected to the inner wall of the reinforcement ring 21 and positioned above the rotating block 20, and a spring 23 is arranged between the first inclined block 22 and the second inclined block 24.

In this embodiment, after the first paperboard 1 is connected to the second paperboard 2, the fourth paperboard 4 is placed close to the first paperboard 1, and the first magnet 10 and the second magnet 11 are adsorbed together due to opposite magnetic poles, such that the first paperboard 1 and the fourth paperboard 4 may be quickly fixed; by the waterproof layer 16 made from the polyethylene, the gift box may be prevented from being damaged by damp; by forming the circular groove in the ventilation layer 17, the air permeability of the first paperboard 1, the second paperboard 2, the third paperboard 3, and the fourth paperboard 4 is better, and the peculiar smell is prevented from being produced inside the gift box; by the buffer layer 18 made of the triangular plate, the gift box is well buffered when impacted to prevent the gift inside from being damaged; by the reinforcement layer 19 made from the high-pressure wood fibers, the first paperboard 1, the second paperboard 2, the third paperboard 3, and the fourth paperboard 4 have higher hardness and better force bearing performance; the first box body 26 and the second box body 27 are made of the corrugated paper, such that the material and quality are good, and the box in the hand is just right in weight, not too heavy or too light, environmentally friendly, and not flashy without substance; the three-in-one white glue is a professional adhesive, has a better sticking effect on paper, and may be subjected to manual or spray construction; the spray construction can enable the paperboard to be sprayed with a large area of the three-in-one white glue evenly, and the three-in-one white glue used for this box has the effect of quick drying; the gift is put into the through groove 5 and placed on the groove 9; by the sponge plate 8, the gift may be protected, and the gift box is prevented from vibrating during shaking to damage the gift; and when the gift passes through the through groove 5, the rotating plate 25 is pushed to rotate to abut against a side surface of the gift, and at the same time the rotating plate 25 is pulled by the spring 23 to abut against the side surface of the gift to prevent the gift from shaking in the gift box.

The above are merely the preferred embodiments of the present disclosure and are not intended to limit the present disclosure. Any modifications, equivalent replacements, improvements, etc. made within the spirit and principle of the present disclosure shall fall within the scope of protection of the present disclosure.

## Claims

1. A novel gift box paperboard, **characterized by** comprising a first box body (26), a first paperboard (1) being arranged on one side of the first box body (26), a clamping block (13) being fixedly connected to the bottom of the first paperboard (1), a second paperboard (2) being arranged on one side of the first paperboard (1), a clamping groove (12) used in cooperation with the clamping block (13) being formed in one side of the second paperboard (2), a rotating shaft (14) being fixedly connected to the bottom of the second paperboard (2), a baffle (15) being rotatably connected to an outer wall of the rotating shaft (14), a third paperboard (3) being arranged on the other side of the second paperboard (2), a fourth paperboard (4) being arranged at the top of the third paperboard (3), a second box body (27) being rotatably connected to one side of the first box body (26), a third magnet (28) being arranged at the top of the first box body (26), a fourth magnet (29) being arranged on an outer wall of the second box body (27), and the third magnet (28) and the fourth magnet (29) having opposite magnetic poles.

2. The novel gift box paperboard according to claim 1, **characterized in that** a waterproof layer (16) is arranged on an outer wall of each of the first paperboard (1), the second paperboard (2), the third paperboard (3), and the fourth paperboard (4), a ventilation layer (17) is arranged on an inner wall of the waterproof layer (16), a buffer layer (18) is arranged on an inner wall of the ventilation layer (17), a reinforcement layer (19) is arranged on an inner wall of the buffer layer (18), the first box body (26) and the second box body (27) are made of corrugated paper, and three-in-one white glue is arranged on an outer wall of each of the first box body (26) and the second box body (27).

3. The novel gift box paperboard according to claim 2, **characterized in that** the waterproof layer (16) is made from polyethylene.

4. The novel gift box paperboard according to claim 2, **characterized in that** circular grooves are equidistantly formed inside the ventilation layer (17).

5. The novel gift box paperboard according to claim 2, **characterized in that** the inside of the buffer layer (18) is made of a triangular plate.

6. The novel gift box paperboard according to claim 2, **characterized in that** the reinforcement layer (19) is made from high-pressure wood fibers.

7. The novel gift box paperboard according to claim 1, **characterized in that** a first magnet (10) is fixedly connected to one side of the fourth paperboard (4), a second magnet (11) is fixedly connected to a side of the first paperboard (1) close to the fourth paperboard (4), and the first magnet (10) and the second magnet (11) are magnetically opposite.

8. The novel gift box paperboard according to claim 1, **characterized in that** a fixing plate (6) is fixedly connected to the top of the second paperboard (2), a rubber plate (7) is fixedly connected to the top of the fixing plate (6), a sponge plate (8) is fixedly connected to the top of the rubber plate (7), and a groove (9) is formed in the top of the sponge plate (8).

9. The novel gift box paperboard according to claim 1, **characterized in that** a through groove (5) is formed inside the fourth paperboard (4), a reinforcement ring (21) is fixedly connected to an inner wall of the through groove (5), a rotating block (20) is fixedly connected to an inner wall of the reinforcement ring (21), a rotating plate (25) is rotatably connected to one end of the rotating block (20), a second inclined block (24) is fixedly connected to the top of the rotating plate (25), a first inclined block (22) is fixedly connected to the inner wall of the reinforcement ring (21) and positioned above the rotating block (20), and a spring (23) is arranged between the first inclined block (22) and the second inclined block (24).
